# EUROPÄISCHE PATENTANMELDUNG

(11) **EP 2 239 160 A1**
(43) Veröffentlichungstag der Anmeldung: **13.10.2010**
(21) Anmeldenummer: 10153925.2
(22) Anmeldetag: 18.02.2010
(51) Int. Cl.: B60K 28/10, B60R 21/01, B60R 25/00, G06T 1/00, G08G 1/16, B60W 40/08, B60W 50/08

(54) **Fahrerassistenzsystem zur Warnung vor Hindernissen**

(30) Priorität: 08.04.2009 DE 102009002277
(71) Anmelder: Robert Bosch GmbH, 70442 Stuttgart (DE)
(72) Erfinder: Latsch, Nico, 71570 Oppenweiler (DE); Schliemann, Mike, 71701 Schwieberdingen (DE); Kloss, Florian, 70499 Stuttgart (DE)

(57) **Zusammenfassung**

Die Erfindung betrifft ein Fahrerassistenzsystem (19) zur Warnung des Fahrers (14) eines Fahrzeugs (1) vor im Fahrzeugumfeld (18) befindlichen Hindernissen (10), insbesondere Personen (12), mit mindestens einem das Fahrzeugumfeld (18) erfassenden Sensor (20), einer Daten des Sensors (20) auswertenden Auswerteeinrichtung (22) und einer Warneinrichtung (23), wobei die Auswerteeinrichtung (22) aufgrund der Daten des Sensors (20) einen Referenzwert generiert und diesen mit einem zeitlich folgenden, ebenfalls aufgrund der Daten des Sensors (20) gebildeten Momentanwert zur Hinderniserfassung vergleicht und wobei mittels der Warneinrichtung (23) eine Warnung abgegeben wird, wenn der Momentanwert vom Referenzwert abweicht. Hierbei ist vorgesehen, dass der Referenzwert auch vor Fahrtantritt des Fahrzeugs (1) dann generiert wird, wenn mittels einer Verhaltensvorrichtung (24) ein bestimmtes Verhalten des Fahrers (14) des Fahrzeugs (1) erfasst wird.

## Beschreibung

Die Erfindung betrifft ein Fahrerassistenzsystem zur Warnung des Fahrers eines Fahrzeugs vor im Fahrzeugumfeld befindlichen Hindernissen, insbesondere Personen, nach Oberbegriff des Anspruchs 1.

### Stand der Technik

Fahrzeuge weisen, bezogen auf die Sitzposition des Fahrers, sogenannte "tote Winkel" auf, die für den Fahrer aus seiner Fahrersitzposition heraus nicht einsehbare Bereiche in der Umgebung des Kraftfahrzeugs bezeichnen. Insbesondere bei Nutzkraftwagen, beispielsweise Lastkraftwagen, sind derartige tote Bereiche ein Problem, an dessen Lösung seit geraumer Zeit zum Schutz vor allem von in der Umgebung des Fahrzeugs befindlichen Fußgängern gearbeitet wird. Beispielsweise ist aus der DE 10 2006 002 232 A1 ein Anfahrwarner mit Kollisionsmelder bei Nutzfahrzeugen bekannt, der mittels Ultraschallsensoren einen vom Fahrer eines Nutzfahrzeugs nicht einsehbaren Bereich vor und/oder seitlich des Fahrerhauses überwacht. Bei dem im Stillstand begriffenen Fahrzeug erfassen die Ultraschallsensoren hierbei diesen Bereich zur Bildung eines Ist-Zustandes. Die Vermessung durch die Ultraschallsensoren dauert eine gewisse Zeit an, wobei der Abstand zu mindestens einem im Zeitpunkt des Stillstandes im Bereich bereits vorhandenen Objekt ermittelt wird. Bei jedem Stillstand des Fahrzeugs wird dieser Ist-Zustand neu ermittelt und als Referenzzustand in einer Steuereinheit gespeichert. Bei Verringerung mindestens eines Abstandes gegenüber dem gespeicherten Referenzzustand wird ein Vorsignal an den Fahrer ausgelöst und ein weiteres Signal gegeben, wenn bei einem aus der Pedalstellung und/oder dem Zustand des Antriebsstrangs und/oder dem Zustand der Bremseinrichtung ableitbaren Anfahrwunsch mindestens ein Abstand geringer ist als im gespeicherten Referenzzustand. Damit vor nicht relevanten Hindernissen nicht unnötig gewarnt wird, wird nach jedem Anhalten des Fahrzeugs die genannte Referenzbildung vorgenommen, um eben solche Objekte auszublenden. Die Vorwarnung beziehungsweise Warnung an den Fahrer erfolgt nur, wenn eine Abstandsverringerung des erfassten Objekts erfolgt, also sich ein erfasstes Objekt bewegt hat. Baulich feste Hindernisse und/oder vom Fahrer zuvor gesehene sollen demzufolge ausgeblendet werden. Dieser Referenzbildung liegt die Annahme zugrunde, dass beim Anhalten des Fahrzeugs der Fahrer das Fahrzeugumfeld und damit auch eventuell vorhandene Personen in der Umgebung des Fahrzeugs gesehen hat. Dies ist aber nicht notwendigerweise zutreffend, wie in der Vergangenheit berichtete Unfälle zeigen, bei denen unter ungünstigen Umständen der Fahrer eines Fahrzeugs Personen in eben diesem toten Winkel oder im nicht einsehbaren Bereich des Fahrzeugs übersehen hat. Beim Anfahren und/oder dem ersten Start des Fahrzeugs besteht überdies das Problem, dass eine solche Referenzbildung nicht vorgenommen werden kann, da das Fahrzeugs hierbei steht und vor allen Hindernissen gewarnt würde, wenn das System aktiv wäre (also auch vor unbewegten Hindernissen und vor solchen, die im direkten Sichtfeld des Fahrers liegen). Die Akzeptanz solcher Systeme bei den Fahrern lässt nach, wenn die Systeme fehlerhafte Warnmeldungen ausgeben oder wenn im Gefahrenfall eine Warnmeldung nicht oder nicht richtig erfolgt.

### Offenbarung der Erfindung

Die genannten Nachteile lassen sich vorteilhaft mit der erfindungsgemäßen Ausbildung eines Fahrerassistenzsystems zur Warnung des Fahrers eines Fahrzeugs vor im Fahrzeugumfeld befindlichen Hindernissen, insbesondere Personen, vermeiden. Ein solches Fahrerassistenzsystem hat mindestens einen das Fahrzeugumfeld erfassenden Sensor, eine Daten des Sensors auswertende Auswerteeinrichtung und eine Warneinrichtung, wobei die Auswerteeinrichtung aufgrund der Daten des Sensors einen Referenzwert generiert und diesen mit einem zeitlich folgenden, ebenfalls aufgrund der Daten des Sensors gebildeten Momentanwert zu Hinderniserfassung vergleicht, und wobei mittels der Warneinrichtung eine Warnung abgegeben wird, wenn der Momentanwert vom Referenzwert abweicht. Dabei ist vorgesehen, dass der Referenzwert auch vor Fahrtantritt des Fahrzeugs dann generiert wird, wenn mittels einer Verhaltensvorrichtung ein bestimmtes Verhalten des Fahrers des Fahrzeugs erfasst wird. Die im Stand der Technik bekannten Fahrerassistenzsysteme zur Warnung des Fahrers vor im Fahrzeugumfeld befindlichen Hindernissen gehen von der teilweise unzutreffenden Annahme aus, dass der Fahrer vor einem ersten Anfahren das Umfeld des Fahrzeugs vollständig kontrolliert oder zumindest die relevanten Fahrzeugumfeldbereiche im Blick hat. Um ohne solche unzutreffenden Annahmen auszukommen, wird die erfindungsgemäße Verhaltensvorrichtung vorgeschlagen, die das Verhalten des Fahrers des Fahrzeugs erfasst, und nur dann, wenn das Verhalten des Fahrers bestimmte geforderte Verhaltensweisen aufzeigt, den Referenzwert generiert. Das Verhalten des Fahrers wird hierbei danach ausgewertet, ob er das zu überwachende Fahrzeugumfeld zur Kenntnis genommen hat. Nur dann wird der Referenzwert gebildet, der im Vergleich mit über die Zeit ermittelten Gegebenheiten des zu überwachenden Fahrzeugsumfelds Rückschlüsse darüber zulässt, ob eine Person sich in das Fahrzeugumfeld hinein bewegt oder sich dort befindet. Hierdurch wird in vorteilhafter Weise der Referenzwert bereits bei Fahrtantritt beziehungsweise vor Fahrtantritt gebildet, so dass beim ersten in Bewegung setzen des Fahrzeugs bereits eine zuverlässige Überwachung des Fahrzeugumfelds bereitgestellt werden kann.

In einer Ausführungsform ist die Verhaltensvorrichtung eine vom Fahrer bedienbare Schalteinrichtung. Durch die Schalteinrichtung wird als Verhalten des Fahrers eine Anwesenheit und/oder ein Überblicken von zu überwachendem Fahrzeugumfeld dadurch sichergestellt, dass der Fahrer die Schalteinrichtung bedienen muss, die zu diesem Zweck bevorzugt in einer solchen Weise angeordnet ist, dass der Fahrer bei ihrer Betätigung zwingend das Fahrzeugumfeld im Blick hat. Beispielsweise lässt sich eine Schalteinrichtung dergestalt ausführen, dass einzelne, vom Fahrer zu betätigende Schaltelemente so angeordnet sind, dass er zu ihrer Betätigung sich an bestimmten Orten im Fahrzeug oder im Fahrzeugumfeld oder in der Umgebung des Fahrzeugs aufhalten muss, so dass sichergestellt werden kann, dass immer dann, wenn eine Betätigung der Schalteinrichtung erfolgt ist, der Fahrer das zu überwachende Fahrzeugumfeld auch gesehen hat. Eventuelle Hindernisse, insbesondere Personen oder auch feststehende Hindernisse, sind dem Fahrer demzufolge durch eigenen Augenschein bekannt, so dass eine gefahrlose und zuverlässige Referenzwertbildung möglich ist. Das vom Fahrer so überblickte Umfeld (nämlich bei Bedienen der Schalteinrichtung) ist ihm bekannt, so dass dieses bekannte Fahrzeugumfeld als Referenzwert verwendet werden kann.

In einer weiteren Ausführungsform ist die Verhaltensvorrichtung eine den Fahrer erkennende und dessen Position im Fahrzeugumfeld erfassende Einrichtung. Die Einrichtung prüft das Fahrzeugumfeld auf die Anwesenheit des Fahrers, den sie anhand von vorgegebenen oder vorgebbaren Merkmalen erkennt. Die Einrichtung prüft hierbei, ob der Fahrer sich in einer solchen Art und Weise im Fahrzeugumfeld oder in der Umgebung des Fahrzeugs aufhält, dass er das zu überwachende Fahrzeugumfeld überblicken kann. Nur in diesem Fall wird die zuverlässige Referenzwertbildung ermöglicht.

Bevorzugt ist vorgesehen, dass die Verhaltensvorrichtung den Fahrer daran erkennt, dass sie kabellos übermittelte Signale einer vom Fahrer mitgeführten Vorrichtung erfasst. Die vom Fahrer mitgeführte Vorrichtung wird demzufolge in geeigneter Weise dergestalt ausgebildet, dass sie Signale kabellos an die Verhaltensvorrichtung oder an einen dieser zugeordneten Empfänger übermittelt. Der Aufenthalt des Fahrers zu bestimmten Zeitpunkten kann demzufolge von der Verhaltensvorrichtung in Bezug auf das Fahrzeugumfeld über die kabellos übermittelten Signale der Vorrichtung erfasst und zur Auswertung registriert werden. Diese Ausführung erlaubt es, den Aufenthalt des Fahrers im Fahrzeugumfeld beziehungsweise in der Umgebung des Fahrzeugs zu erfassen und zur Auswertung zu registrieren, ohne dass der Fahrer in seiner Bewegungsfreiheit eingeschränkt wird. Auf diese Weise wird eine sichere, dabei komfortable Referenzwertbildung vor Fahrtantritt ermöglicht.

Bevorzugt ist die mitgeführte Vorrichtung eine Funkeinrichtung oder eine Infraroteinrichtung. Unter einer Funkeinrichtung ist hierbei jede Einrichtung zu verstehen, die aktiv Funksignale aussendet, und auch jede Einrichtung, die bestehende elektrische Felder zur Auswertung modifiziert, beispielsweise im Stand der Technik bekannte RFID-Vorrichtungen, wobei die Vorrichtung einen solchen RFID-Chip aufweist, der den Fahrer als solchen ausweist.

In einer weiteren bevorzugten Ausführungsform ist die mitgeführte Vorrichtung im Fahrzeugschlüssel des Fahrzeugs integriert oder angeordnet. Als Fahrzeugschlüssel wird hierbei sowohl ein tatsächlicher, mechanisch wirkender Schlüssel, gegebenenfalls mit zugeordneten Nebeneinrichtungen wie Wegfahrsperreneinrichtung, verstanden, als auch moderne Systeme, beispielsweise Keyless-Go-Systeme in Form von Chips oder Chipkarten, insbesondere unter Verwendung von RFID-Technik. Wesentlich hierbei ist, dass der Fahrer keine zusätzliche Vorrichtung neben dem Fahrzeugschlüssel mitführen muss, sondern dass in besonders bequemer und zuverlässiger Weise der Fahrer als zum Führen des Fahrzeugs berechtigte Person wie auch als die zur Sicherstellung des Fahrzeugumfeldes verantwortliche Person erkannt und ihr Verhalten registriert wird, damit auf sichere und zuverlässige Art und Weise der Referenzwert, wie vorstehend beschrieben, vor Fahrtantritt gebildet werden kann.

Weitere vorteilhafte Ausführungsformen ergeben sich aus den Unteransprüchen und aus Kombinationen derselben.

Die Erfindung wird nachfolgend anhand eines Ausführungsbeispiels näher erläutert, ohne aber hierauf beschränkt zu sein.

Es zeigen
- Figur 1: ein Fahrerassistenzsystem und
- Figur 2: eine Anzeige/Anzeigendarstellung erkannter Objekte des Fahrerassis- tenzsystems.

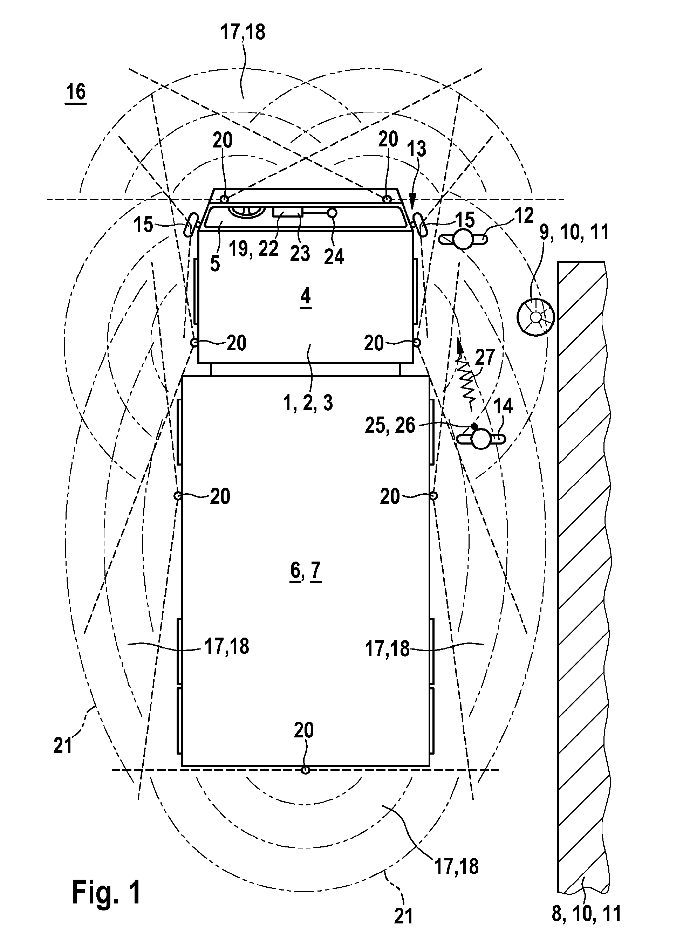

Figur 1 zeigt ein Fahrzeug 1, nämlich ein Nutzfahrzeug 2, im Besonderen einen Lastkraftwagen 3. Dieser weist ein Führerhaus 4 mit einer Fahrersitzposition 5 sowie einen Nutzbereich 6 auf, beispielsweise in Form eines Kastenaufbaus 7. Im gezeigten Zustand ist das Fahrzeug 1 im Wesentlichen parallel zu einer ortsfesten Hauswand 8 geparkt, wobei sich zwischen dem Führerhaus 4 und der Hauswand 8, nahe der Hauswand 8, ein ebenfalls ortsfester Poller 9 befindet. Die Hauswand 8 und der Poller 9 sind hierbei Hindernisse 10, nämlich ortsfeste Hindernisse 11. Als weiteres Hindernis 10 ist eine Person 12 im Bereich zwischen dem Poller 9 und dem Führerhaus 4 auf einer Beifahrerseite 13 des Fahrzeugs 1 befindlich, wobei die Person 12 steht. Die Person 12 kann ebenso wie der Poller 9 von der Fahrersitzposition 5 aus von dem hier in Fahrtrichtung gesehen rechts neben dem Fahrzeug, nämlich dem Kastenaufbau 7, stehenden Fahrer 14 nicht eingesehen werden, und zwar weder über direkten Blickkontakt aus der Fahrersitzposition 5 heraus noch über Seitenspiegel 15 des Fahrzeugs 1. Die das Fahrzeug 1 umgebende Umgebung 16, genauer die nähere Umgebung 17, die als Fahrzeugumfeld 18 betrachtet werden kann, wird von einem dem Fahrzeug 1 zugeordneten Fahrerassistenzsystem 19 mittels mehrerer am Fahrzeug 1 angeordneter Sensoren 20, beispielsweise mittels Ultraschall 21, erfasst und in einer dem Fahrerassistenzsystem 19 zugehörigen Auswerteeinrichtung 22, die mit einer Warneinrichtung 23 verbunden ist, ausgewertet. Die Warneinrichtung 23 gibt beim Anfahren des Fahrzeugs 1 (in eine beliebige Bewegungsrichtung) ein Warnsignal an den Fahrer 14 (der sich beim Anfahren auf seiner Fahrersitzposition 5 befindet) aus, wenn sich beim Anfahren ein Hindernis 10 im Fahrzeugumfeld 18 befindet, das der Fahrer 14 zuvor nicht gesehen hat. Hierzu wird ein Referenzwert generiert, der das Fahrzeugumfeld 18 gewissermaßen als für das erwünschte Anfahren ungefährlichen Status abbildet, und wobei davon ausgegangen wird, dass der Fahrer 14 dieses so abgebildete, den Referenzwert ergebende Fahrzeugumfeld 18 vor Fahrtantritt hinreichend inspiziert hat. Erfassen die Sensoren 20 Änderungen in dem so erfassten Fahrzeugumfeld 18 (also gegenüber dem so gebildeten Referenzwert), beispielsweise dadurch, dass sich die Person 12 relativ zum Fahrzeug 1 bewegt oder sich das Fahrzeug 1 der Person 12 annähert, so gibt die Warneinrichtung 23 ein Warnsignal an den Fahrer 14 aus. Um sicher zu gehen, dass der Fahrer 14 das Fahrzeugumfeld 18 auch tatsächlich in einer solchen Art und Weise in Augenschein genommen hat, dass der Referenzwert zutreffend von einer für das erwünschte Anfahren ungefährlichen Situation ausgehen kann, wird der Fahrer 14 bei Inspektion des Fahrzeugs 1 und/oder des Fahrzeugumfeldes 18 von einer Verhaltensvorrichtung 24 im Fahrzeugumfeld 18 erkannt und seine Position im Fahrzeugumfeld erfasst. Die Verhaltensvorrichtung 24 ist hierbei der Auswerteeinrichtung 22 des Fahrerassistenzsystems 19 zugeordnet. Für eine zutreffende Erkennung des Fahrers 14 im Fahrzeugumfeld 18 durch die Verhaltensvorrichtung 24 führt der Fahrer 14 eine Vorrichtung 25 mit, die zu seiner Authentifizierung und Autorisierung gegenüber der Verhaltensvorrichtung 24 führt. Die Vorrichtung 25 weist hierbei eine Funkeinrichtung 26 auf, die kabellos Signale 27 an die Verhaltensvorrichtung 24 übermittelt. Die Verhaltensvorrichtung 24 kann dadurch die Position des Fahrers 14 relativ zum Fahrzeug 1 im Fahrzeugumfeld 18 erfassen, wodurch für die Auswerteeinrichtung 22 des Fahrerassistenzsystems 19 als Voraussetzung für die Bildung des Referenzwertes bezüglich des Fahrzeugumfelds 18 und darin befindlicher Hindernisse 10 oder die Freiheit von Hindernissen 10 unterstellt werden kann, dass der Fahrer 14 bei seinem Aufenthalt im Fahrzeugumfeld 18 dort befindliche Hindernisse 10 gesehen hat, so dass diese als nicht weiter relevant

(falls unbeweglich) bei Bildung des Referenzwertes gewissermaßen ausgeblendet werden können. Lediglich dann, wenn sich bei Anfahren des Fahrzeugs 1 die Position von Hindernissen 10 im Fahrzeugumfeld 18 relativ zum Fahrzeug 1 in irgendeiner Weise verändert, wird eine Warnmeldung von der Warneinrichtung 23 ausgegeben, um den Fahrer 14 darauf hinzuweisen, dass das Fahrzeugumfeld 18 nicht mehr dem Zustand entspricht, den er zuvor als sicher überprüft hat und der der Referenzwertbildung durch das Fahrerassistenzsystem 19 zugrunde lag. Bevorzugt ist die Funkeinrichtung 26 eine RFID-Einrichtung, oder eine solche Einrichtung, die dem, Fahrzeugschlüssel oder einem anderen, vom Fahrer 14 zum Starten und Führen des Fahrzeugs 1 ohnehin mitzuführenden Vorrichtung zugehörig ist, beispielsweise einem Fahrzeugschlüssel oder einer Keyless-Go-Karte.

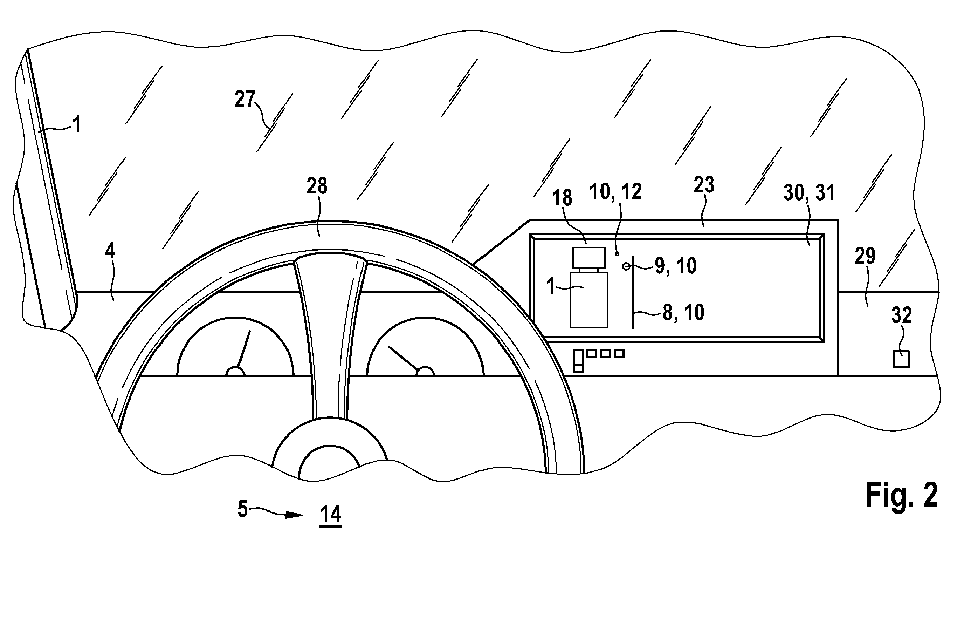

Figur 2 zeigt einen Blick auf der Fahrersitzposition 5 im Führerhaus 4 des Fahrzeugs 1 durch eine Windschutzscheibe 27, wie der Fahrer 14 ihn üblicherweise bei Führen des Fahrzeugs 1 vorfindet. Im Blickfeld des Fahrers 14, etwa in der Nähe eines Lenkrads 28 auf einem Armaturenbrett 29 angeordnet, ist die Warneinrichtung 23, die bevorzugt ein bildgebendes System 30 aufweist, beispielsweise einen Monitor 31, auf dem zumindest schematisch das Fahrzeug 1 und in dem Fahrzeugumfeld 18 befindliche Hindernisse 10 dargestellt werden. Wie bereits zu Figur 1 beschrieben sind hierbei als (betreffend die Warnmeldung auszublendende) Hindernisse 10 die Hauswand 8 und der Poller 9 dargestellt, sowie als im Bewegungsfalle relevantes Hindernis 10 die Person 12. Sollte sich also nach Bildung des Referenzwertes bei Anfahren des Fahrzeugs 1 die Position der Person 12 relativ zum Fahrzeug 1 ändern oder geändert haben, wird eine Warnmeldung über die Warneinrichtung 23 ausgegeben, wodurch der Fahrer 14 erkennen kann, dass ein gefahrloses Anfahren nicht oder nicht unter allen Umständen möglich ist, sondern erhöhte Aufmerksamkeit auf das Fahrzeugumfeld 18 zu richten ist. Bevorzugt kann das für die Warnmeldung verantwortliche Hindernis 10, beispielsweise die Person 12, auf dem Monitor 31 in einer Signalfarbe oder blinkend oder in einer ähnlichen, Aufmerksamkeit erregenden Weise dargestellt werden, so dass der Fahrer 14 ohne Weiteres in der Lage ist, die potentielle Gefahrenquelle zu lokalisieren und eine möglicherweise bereits erfolgende Bewegung des Fahrzeugs 1 so einzurichten (beispielsweise durch Gegenlenken oder Abbremsen), dass eine Gefährdung des die Warnmeldung auslösenden Hindernisses 10, beispielsweise der Person 12, vermieden wird. Besonders bevorzugt werden verschiedene Warnmeldungen kombiniert, insbesondere optische und akustische Signalisierungen, so dass in jedem Fall die Aufmerksamkeit des Fahrers 14 erregt wird.

In einfacheren Ausführungen wird die Verhaltensvorrichtung 24 beispielsweise so ausgebildet, dass im Führerhaus 4 Schalter oder Taster als Schalteinrichtung 32 angeordnet sind, die der Fahrer 14 betätigen muss, und wobei durch die Lage und Anordnung der Schalter sichergestellt ist, dass bei ihrer Betätigung durch den Fahrer 14 der Fahrer 14 das Fahrzeugumfeld 18 in jedem Fall in seinem Blick hat, beispielsweise dadurch, dass er seine Körperposition aus der Fahrersitzposition 5 heraus verlagern muss, wobei er ohne Weiteres die in Figur 1 dargestellten Außenspiegel 15 in einer solchen Weise einsehen kann, dass das Fahrzeugumfeld 18, das von der Fahrersitzposition 5 aus im toten Winkel liegt, einsehbar ist. Werden alle so vorgesehenen Schalter oder Taster innerhalb einer vorgebbaren Zeitspanne betätigt, kann das Fahrerassistenzsystem 19 ebenfalls zuverlässig einen Referenzwert für eine sichere Fahrzeugumgebung bilden.

## Patentansprüche

1. Fahrerassistenzsystem (19) zur Warnung des Fahrers (14) eines Fahrzeugs (1) vor im Fahrzeugumfeld (18) befindlichen Hindernissen (10), insbesondere Personen (12), mit mindestens einem das Fahrzeugumfeld (18) erfassenden Sensor (20), einer Daten des Sensors (20) auswertenden Auswerteeinrichtung (22) und einer Warneinrichtung (23), wobei die Auswerteeinrichtung (22) aufgrund der Daten des Sensors (20) einen Referenzwert generiert und diesen mit einem zeitlich folgenden, ebenfalls aufgrund der Daten des Sensors (20) gebildeten Momentanwert zur Hinderniserfassung vergleicht und wobei mittels der Warneinrichtung (23) eine Warnung abgegeben wird, wenn der Momentanwert vom Referenzwert abweicht, **dadurch gekennzeichnet, dass** der Referenzwert auch vor Fahrtantritt des Fahrzeugs (1) dann generiert wird, wenn mittels einer Verhaltensvorrichtung (24) ein bestimmtes Verhalten des Fahrers (14) des Fahrzeugs (1) erfasst wird.

2. Fahrerassistenzsystem nach Anspruch 1, **dadurch gekennzeichnet, dass** die Verhaltensvorrichtung (24) eine vom Fahrer (14) bedienbare Schalteinrichtung (32) ist.

3. Fahrerassistenzsystem nach einem der vorhergehenden Ansprüche, **dadurch gekennzeichnet, dass** die Verhaltensvorrichtung (24) eine den Fahrer (14) erkennende und dessen Position im Fahrzeugumfeld (18) erfassende Einrichtung ist.

4. Fahrerassistenzsystem nach einem der vorhergehenden Ansprüche, **dadurch gekennzeichnet, dass** die Verhaltensvorrichtung (24) den Fahrer (14) daran erkennt, dass sie kabellos übermittelte Signale einer vom Fahrer (14) mitgeführten Vorrichtung (25) erfasst.

5. Fahrerassistenzsystem nach einem der vorhergehenden Ansprüche, **dadurch gekennzeichnet, dass** die mitgeführte Vorrichtung (25) eine Funkeinrichtung (26) oder eine Infraroteinrichtung ist.

6. Fahrerassistenzsystem nach einem der vorhergehenden Ansprüche, **dadurch gekennzeichnet, dass** die mitgeführte Vorrichtung (25) im Fahrzeugschlüssel des Fahrzeugs (1) integriert/angeordnet ist.
